# EUROPEAN PATENT APPLICATION

(11) **EP 4 825 580 A1**
(43) Date of publication of application: **21.10.2026**
(21) Application number: 25170438.3
(22) Date of filing: 14.04.2025
(51) Int. Cl.: B32B 27/08, B32B 27/20, B32B 27/30

(54) **WATERPROOFING MEMBRANE**

(71) Applicant: Sika Technology AG, 6340 Baar (CH)
(72) Inventor: BARMET, Robin Kim, Canton, 02021 (US); HERGER, Christian, 6060 Sarnen (CH); SPIEGEL, Sylvia, 6060 Sarnen (CH); DA RIN, Roman, 6060 Sarnen (CH)
(74) Representative: Sika Patent Attorneys

(57) **Abstract**

A waterproofing membrane comprises:
a) a functional layer comprising:
- 10 - 90 wt.-%, especially, 30 - 70 wt.%, based on the total weight of the functional layer, of a first thermoplastic polymer component, whereby the first thermoplastic polymer component comprises an ethylene-vinyl acetate copolymer having a vinyl acetate content of at least 50 wt.%, especially at least 60 wt.%, in particular at least 65 wt. %;
- 10 - 90 wt.-%, especially, 30 - 70 wt.%, based on the total weight of the functional layer, of a solid filler component, whereby the solid filler component, with respect to the total weight of the solid filler component, comprises at least 50 wt.%, especially at least 75 wt.%, of calcium carbonate particles;

b) a barrier layer comprising:
- 50 - 100 wt.-%, based on the total weight of the barrier, of a second thermoplastic polymer component;

wherein a composition of the functional layer is different from a composition of the barrier layer.

## Description

### Technical field

The invention relates to a waterproofing membrane, especially for use in construction industry. A further aspect of the invention is related to a construction, especially a building roof, a building facade, a base slab, an inner and/or outer area of a tunnel, a canopy, a bridge, a swimming pool, a landfill, a water retention, a pond and/or a dike comprising a membrane. Furthermore, the invention is concerned with a method for producing a membrane and the use of a membrane for sealing and/or waterproofing a construction.

### Background Art

Waterproofing membranes are commonly used in the construction industry for sealing bases, underground surfaces or buildings against water penetration.

State-of-the-art waterproofing membranes are multilayer systems comprising a polymer-based barrier layer as the principal layer to provide water tightness. Typical polymers used in barrier layers include thermoplastics such as plasticized polyvinylchloride (p-PVC) and thermoplastic polyolefins (TPO) or elastomers such as ethylene-propylene diene monomer (EPDM) and crosslinked chlorosulfonated polyethylene (CSPE). One of the drawbacks of polymer-based barrier layers is their poor bonding properties; they typically show low bonding strength to adhesives that are commonly used in the construction industry, such as epoxy adhesives, polyurethane adhesives, and cementitious compositions. Therefore, a contact layer or functional layer, for example, a fleece backing, is typically used to provide sufficient bonding of the polymer-based barrier layer and the structure to be waterproofed.

In waterproofing applications, the membrane is typically post-applied to an existing concrete structure. In this case the membrane is bonded with an adhesive or a sealing tape via its functional layer to the surface of the concrete structure to be waterproofed. In pre-applied waterproofing applications, however, the membrane is laid out before the concrete structure to be waterproofed is built. In this case, the membrane is placed with its barrier layer against an underlying structure or formwork and fresh concrete is then cast against the surface of the functional layer, thereby fully and permanently bonding the membrane to the surface of the hardening concrete.

In pre-applied waterproofing applications, typically an adhesive is used, to bond the barrier layer to the functional layer and to the fresh concrete cast against the functional layer. The adhesive should also enable the fresh concrete to penetrate deeply into to functional layer before hardening in order to provide high resistance to penetrating water.

One of the main challenges related to multilayer waterproofing membranes is to ensure water tightness after infiltration in case of leak in the barrier layer. Water tightness after infiltration means in general that the sealing construction should be able to prevent the infiltrated water from penetrating to the space between the membrane and the waterproofed surface. A leak in the barrier layer can be a result of inward growing tree roots, material failure or tensile or shear forces directed to the membrane. If the water tightness after infiltration is lost, water is able to flow laterally underneath the membrane and to invade the interior of the building structure. In such cases, the exact location of the leak in the barrier layer is also difficult to detect.

One disadvantage of such kind of state-of-the-art multilayer waterproofing membranes is related to the use of adhesives, which increases the complexity of the membrane build-up and consequently the production costs of such membranes. The adhesive has to provide good binding to the low surface energy polymers in the barrier layers, form a strong bond to the functional layer and to fresh concrete and have a good resistance to varying temperature ranges, UV irradiation and oxidation. Adhesives fulfilling all the requirements, if available at all, are expensive and thus increase the production cost of such membranes by a significant amount.

Another disadvantage of state-of-the-art multilayer waterproofing membranes is related to the use of fleece backings as functional layer to provide sufficient bonding between the membrane and the substrate to be waterproofed. In waterproofing and roofing applications the adjacent membrane sheets have to be homogenously joined to each other in a reliable way to ensure water tightness of the sealing construction. Membranes having a fleece backing cannot be joined by heat welding but instead the edges of the membranes have to be bonded together either with an adhesive or with a sealing tape adhered on top of the seam and/or under the seam. The use of an adhesive or a sealing tape to join adjacent membrane sheets complicates the installation process and increases application costs.

In this regard, WO 2017/108843 A1 (Sika Technology AG) describes a membrane used in waterproofing and roofing applications. One of the advantages of this membrane is its simple build-up, which enables lower production costs compared to state-of-the-art membranes while still providing full and permanent bonding to cementitious compositions and water tightness after infiltration. Another advantage is that the membrane has good heat welding properties, which means that adjacent membranes can be homogeneously joined by heat welding instead of using an adhesive or a sealing tape to bond overlapping membrane sheets

In terms of composition, the membrane comprises a thermoplastic barrier layer and a contact layer bonded to at least a portion of the barrier layer, wherein the contact layer comprises a mixture of a solid filler component and a thermoplastic polymer component. The properties of the contact layer enable the membrane to be fully bonded to cementitious compositions after hardening as well as to adhesives commonly used in the construction industry. In specific examples, the contact layer is essentially comprised of ethylene-vinyl acetate copolymers and cement as the solid filler component, whereas the barrier layer is composed of a polyethylene-based thermoplastic layer.

However, in terms of sustainability and CO₂ footprint, such kind of membranes are not ideal, in particular in view of the rather high cement content in the membranes. Furthermore, recycling of such membranes is a demanding task.

There is therefore still a need for improved membranes that have fewer or no of the aforementioned disadvantages.

### Summary of the invention

The object of the present invention is to provide an improved membrane, which can be used to protect surfaces against water penetration, for example in basement waterproofing, roofing and tunneling applications. In particular, the membrane should be more sustainable, have the lowest possible CO₂ footprint and/or be as easily recyclable as possible. Furthermore, the membrane should be able to be fully and permanently bonded to concrete and other cementitious compositions, as well as to adhesives commonly used in the construction industry. Also, preferably, the membrane should retain water tightness after infiltration in case of a leaking barrier layer, have good heat welding properties and/or good stability against mechanical stresses.

According to the invention, the aforementioned object is achieved with the membrane according to claim 1.

The main concept of the invention is that the membrane comprises a functional layer with a thermoplastic ethylene-vinyl acetate copolymer having a vinyl acetate content of at least 50 wt.% in combination with calcium carbonate as main constituent of the solid filler in the functional layer; and a barrier layer based on at least one second thermoplastic polymer.

Although cement may be present in the functional layer, e.g. for special applications, in general no cement or other mineral binder is required in the functional layer. Therefore, the membranes according to the invention are much more sustainable and have as significantly reduced CO₂ footprint when compared with other membranes comprising high proportions of cement as essential elements.

Additionally, recycling of the membranes is less laborious due to the lower cement content and the improved separability of calcium carbonate from the thermoplastic polymer(s).

Nevertheless, the properties of the functional layer enable the membrane according to the invention to be fully bonded to cementitious compositions as well as to adhesives commonly used in the construction industry.

Furthermore, the membranes according to the invention still are rather simple to produce, which enables lower production costs compared to other state-of-the-art membranes while still providing full and permanent bonding to cementitious compositions and water tightness after infiltration.

Also, the membranes according to the invention have good heat welding properties, which means that adjacent membranes can be homogeneously joined by heat welding instead of using an adhesive or a sealing tape to bond overlapping membrane sheets.

When compared with the membranes described in WO 2017/108843 A1 (Sika Technology AG), this comes with great surprise since it could not be expected that omitting cement as the only solid filler component and instead using calcium carbonate as the main solid filler constituent would result in membranes that can solve the objects of the invention. Specifically, it should be noted that cement is a hydraulic binder material that undergoes hydration reactions to form insoluble hydrates. In contrast, calcium carbonate in the present context is an inert material. Without wishing to be bound by the theory,

it is assumed that there is a functional interaction between the specifically selected ethylene-vinyl acetate copolymer having a vinyl acetate content of at least 50 wt.% and the calcium carbonate.

Further aspects and preferred embodiments of the present invention are described in the further independent and dependent claims and/or set forth in the following description.

### Description of the invention

A first aspect of the present invention is related to a waterproofing membrane, especially for use in the construction industry, comprising:
a) a functional layer comprising:
   - 10 - 90 wt.-%, especially, 30 - 70 wt.%, based on the total weight of the functional layer, of a first thermoplastic polymer component, whereby the first thermoplastic polymer component comprises an ethylene-vinyl acetate copolymer having a vinyl acetate content of at least 50 wt.%, especially at least 60 wt.%, in particular at least 65 wt.%;
   - 10 - 90 wt.-%, especially, 30 - 70 wt.%, based on the total weight of the functional layer, of a solid filler component, whereby the solid filler component, with respect to the total weight of the solid filler component, comprises at least 50 wt.%, especially at least 75 wt.%, of calcium carbonate particles;
b) a barrier layer comprising:
   - 50 - 100 wt.-%, based on the total weight of the barrier, of a second thermoplastic polymer component;
   wherein a composition of the functional layer is different from a composition of the barrier layer.

The term "polymer" designates a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically nonuniform.

The term "thermoplastic polymer component" designates a component of the functional layer and/or the barrier layer comprising one or more thermoplastic polymers. Especially the first thermoplastic polymer component of the functional layer is chemically and/or physically different from the second thermoplastic polymer component of the barrier layer.

Likewise, the term "solid filler component" designates a component of the functional layer and/or the barrier layer comprising one or more solid fillers.

"Calcium carbonate" in particular stands for calcitic fillers produced from chalk, limestone or marble by grinding and/or precipitation. The calcium carbonate as well as optionally present additional solid fillers is/are present in the form of particles.

Preferably, the solid filler component, i.e. the calcium carbonate and optionally present additional solid fillers, is/are dispersed throughout, especially uniformly, the first thermoplastic polymer component in the functional layer. Thereby, the first thermoplastic polymer component in particular forms a continuous phase for the dispersed solid fillers.

Likewise, the second thermoplastic polymer component in particular forms a continuous phase for further dispersed solid fillers.

The calcium carbonate is preferably in the form of finely divided particles, in order to obtain a functional layer with uniform surface properties. The term "finely divided particles" refers to particles, whose mean particle size d₅₀ does not exceed 100 µm. The term mean particle size d₅₀ refers to a particle size below which 50 % of all particles by volume are smaller than the d₅₀ value. Preferably the mean particle size d₅₀ of the calcium carbonate is 0.1 - 50 µm, more preferably 0.2 - 25 µm, even more preferably 0.5 - 15 µm, most preferably 0.9 - 8 µm or 1 - 5 µm. For example, the mean particle size d₅₀ of the calcium carbonate is 1 - 2 µm or 2.1 - 3 µm.

The term "particle size" refers to the area-equivalent spherical diameter of a particle. The particle size distribution can be measured by laser diffraction according to the method as described in standard ISO 13320:2009. For determination of the particle size distribution, the particles are suspended in water (wet dispersion method). A Mastersizer 2000 device (trademark of Malvern Instruments Ltd, GB) can be used in measuring particle size distribution.

Especially, the functional layer and the barrier layer are in direct contact with each other. Put differently, in this case, no additional layer is present at an interface between the functional layer and the barrier layer. However, in particular, there is an interface between the functional layer and the barrier layer.

In particular, the functional layer and the barrier layer are at least in parts materially bonded together on opposing surfaces, in particular over the entire opposing surfaces. Bonding can e.g. be realized by self-adhesion, adhesively bonding with an additional adhesive and/or by welding.

Especially, the functional layer and the barrier layer are directly bonded on opposing surfaces with each other, at least in parts, especially particular over the entire opposing surfaces. The expression "directly bonded" is understood to mean that no further layer or substance is present between the layers, and that the two layers are directly bonded to each other or adhere to each other. At the interface between the two layers, the materials forming the layers can also be present mixed with each other.

According to another embodiment, the functional layer and the barrier layer are indirectly bonded together, e.g. by an additional layer of an adhesive, at least in parts, in particular over the entire opposing surfaces.

Especially the functional layer and the barrier layer with respect to their opposing surfaces are congruent and/or with respect to their lateral extension are essentially identical in size. In particular, the functional layer and the barrier layer lie congruently on one another.

According to a special embodiment, the solid filler component in addition to calcium carbonate comprises additional solid filler selected from mineral binder and/or inert fillers.

The term "inert fillers" designates fillers, especially mineral fillers, that are not chemically reactive. They are e.g. produced from natural mineral sources by mining followed by comminution to required particle size and shape. In particular, the inert filler includes sand, calcium carbonate, crystalline silicas, dolomite, clay, talc, mica, wollastonite, barite, perlite, diatomaceous earth, pumice, and/or vermiculite.

The term "mineral binder" designates a binder, which in the presence of water reacts in a hydration reaction under formation of solid hydrates or hydrate phases. In particular, the term "mineral binder" refers to non-hydrated mineral binders, i.e. mineral binders, which have not been mixed with water and reacted in a hydration reaction.

Especially, the mineral binder is a hydraulic binder, a non-hydraulic binder, a latent hydraulic binder and/or a pozzolanic binder. In particular, the mineral binder is a cement.

The term "hydraulic binder" designates substances that harden as a result of chemical reactions with water ("hydration reactions") and produce hydrates that are not water-soluble. In particular, the hydration reactions of the hydraulic binder take essentially place independently of the water content. This means that hydraulic binders can harden and retain their strength even when exposed to water, for example underwater or under high humidity conditions. Examples of hydraulic binders include cement, cement clinker and hydraulic lime. In contrast, "non-hydraulic binders" such as air-slaked lime (non-hydraulic lime) and gypsum, are at least partially water-soluble and must be kept dry in order to retain their strength.

The term "gypsum" designates any known form of gypsum, in particular calcium sulfate dehydrate, calcium sulfate α-hemihydrate, calcium sulfate ß-hemihydrate, or calcium sulfate anhydrite or mixtures thereof.

The term "latent hydraulic binders" designates particular type II concrete additives with latent hydraulic character according to DIN EN 206-1:2000. These materials are calcium aluminosilicates that are not able to harden directly or harden too slowly when mixed with water. The hardening process is accelerated in the presence of alkaline activators, which break the chemical bonds in the binder's amorphous (or glassy) phase and promote the dissolution of ionic species and the formation of calcium aluminosilicate hydrate phases. Examples of latent hydraulic binders include granulated blast furnace slag.

The term "pozzolanic binders" designates in particular type II concrete additives with pozzolanic character according to DIN EN 206-1:2000. These materials are siliceous or aluminosilicate compounds that react with water and calcium hydroxide to form calcium silicate hydrate or calcium aluminosilicate hydrate phases. Pozzolanic binders include natural pozzolans such as trass and artificial pozzolans such as fly ash and silica fume.

The term "cement" designates ground hydraulic binders, which apart from the hydraulic binders as the main constituents, usually contain small quantities of calcium sulfate (gypsum and/or hemihydrate and/or anhydrite), and optionally secondary constituents and/or cement additives such as grinding aids. The main constituents are contained in quantities of more than 5% by weight. The main constituents can be Portland cement clinker, also referred to as clinker or cement clinker, slag sand, natural or artificial pozzolans, fly ash, for example, siliceous or calcareous fly ash, burnt shale, limestone and/or silica fume. As secondary constituents, the cements can contain up to 5% by weight of finely divided inorganic, mineral substances, which originate from clinker production.

If present, a mean particle size d₅₀ of the additional solid filler is below 300.0 µm, more preferably below 250.0 µm, even more preferably below 200.0 µm, most preferably below 150.0 µm.

For example, a mean particle size d₅₀ of the additional solid filler is 0.1 - 300.0 µm, more preferably 1 - 250.0 µm, even more preferably 2.0 - 200.0 µm, most preferably 2.0 - 150.0 µm.

Preferably, the overall particle size of the solid filler component (of at least 98 percent of the particles) is below 250 µm, more preferably below 200 µm, even more preferably below 100 µm.

According to a highly preferred embodiment, a proportion of mineral binder in the solid filler component, especially hydraulic binder, in particular cement, is smaller than 40 wt.%, especially smaller than 25 wt.%, especially smaller than 10 wt.%, smaller than 5 wt.% or 0 wt.%.

Further preferred, a proportion of mineral binder, especially cement, in the membrane, with respect to the total weight of the membrane, is smaller than 20 wt.%, especially smaller than 13 wt.%, especially smaller than 5 wt.% or 0 wt.%. Put differently, the overall content of mineral binder, especially hydraulic binder, in particular cement, is kept at a rather low level or mineral binder is completely omitted in this case.

If mineral binder, in particular hydraulic binder, especially cement, is present, a proportion of mineral binder in the solid filler component is for example from 1 - 40 wt.%, especially 5 - 35 wt.%, especially 10 - 25 wt.%. Such levels of mineral binder in combination with the calcium carbonate turned out to be beneficial with respect to the desired properties of the membrane.

Especially, the solid filler component, with respect to the total weight of the solid filler component, comprises 80 - 100 wt.%, especially 90 - 100 wt.%, in particular 95 - 100 wt.% or 97 - 100 wt.%, of calcium carbonate. In this case, in particular, the sustainability and CO₂ footprint of the membrane according to the invention can further be improved.

Further preferred, with respect to the total weight of the calcium carbonate and any magnesium carbonate and iron oxide possibly present in the calcium carbonate particles, a proportion of magnesium carbonate is smaller than 1 wt.%, especially smaller than 0.75 wt.%, in particular ≤ 0.4 wt.%; and/or a proportion of iron oxide is smaller than 0.5 wt.%, especially smaller than 0.3 wt.%, in particular ≤ 0.1 wt.%.

With such kind of calcium carbonate particles, adhesion to mineral binder surfaces can further be improved.

According to another preferred embodiment, the calcium carbonate particles are coated with a hydrophobic coating.

Especially, the hydrophobic coating is selected from the group consisting of fatty acids and/or salts thereof, e.g. stearic acid, palmitic acid, oleic acid and/or salts thereof. Highly preferred stearic acid and/or salts thereof. However, other hydrophobic coatings may be suitable as well.

For example, a proportion of the hydrophopic coating, especially fatty acids and/or salts thereof, is in the range of 0.01 - 2 wt.%, especially 0.1 - 1.5 wt.%, in particular 0.2 - 1.0 wt.-% or 0.3 - 0.7 wt.%, with respect to the total weight of the calcium carbonate particles.

Such proportions are in particular beneficial with calcium carbonate particle having a mean particle size d₅₀ of 0.1 - 50 µm, more preferably 0.2 - 25 µm, even more preferably 0.5 - 15 µm, most preferably 0.9 - 8 µm or 1 - 5 µm.

Preferably, the hydrophopic coating is present in an amount that just covers the surface of the calcium carbonate particles. This amount is sometimes referred to as "monolayer concentration".

The ethylene-vinyl acetate copolymer of the first thermoplastic polymer component has a vinyl acetate content of at least 50 wt.%, especially at least 60 wt.%, in particular at least 65 wt.%. The vinyl acetate content is calculated with respect to the total weight of the ethylene-vinyl acetate copolymer.

Preferably, the vinyl acetate content is in the range of 50 - 90 wt.%, especially 60 - 85 wt.%, in particular 65 - 80 wt.% or 65 - 75 wt.%.

According to a further preferred embodiment, the first thermoplastic polymer component comprises 15 - 75 wt.%, especially 20 - 55 wt.%, particularly 35 - 55 wt.%, of the ethylene-vinyl acetate copolymer having a vinyl acetate content of at least 50 wt.%. Thereby, in particular, the vinyl acetate content is at least 60 wt.%, especially at least 65 wt.%.

Preferably, the first thermoplastic polymer component has a melting point of 25 - 250°C, preferably 55 - 225°C, more preferably 60 - 200 °C, most preferably 65 - 150°C. Functional layers with the melting point of the first thermoplastic polymer component in the above-mentioned ranges were found to provide particularly good concrete adhesion strengths.

The term "melting point" refers to the maximum of the curve determined according to ISO 11357 standard by means of dynamic differential calorimetry (DSC). At the melting point the material undergoes transition from the solid to the liquid state. The measurement can be performed with a Mettler Toledo 822e device at a heating rate of 2 degrees centigrade/min. The melting point values can be determined from the measured DSC curve with the help of the DSC software.

Especially, the first thermoplastic polymer component of the functional layer additionally comprises at least one further thermoplastic polymer. The at least one further thermoplastic polymer is different form the ethylene-vinyl acetate copolymer having a vinyl acetate content of at least 50 wt.%.

In particular, the at least one further thermoplastic polymer is selected from the group consisting of ethylene - vinyl acetate copolymers (EVA), ethylene - acrylic ester copolymers, ethylene - α-olefin co-polymers, ethylene - propylene co-polymers, polypropylene (PP), polyethylene (PE), polyvinylchloride (PVC), polyethylene terephthalate (PET), polystyrene (PS), polyamides (PA), chlorosulfonated polyethylene (CSPE), ethylene propylene diene rubber (EPDM), polyisobutylene (PIB), and mixtures thereof.

Highly preferred, the at least one further thermoplastic polymer is selected from a polyolefin and/or an ethylene-vinyl acetate copolymer having a vinyl acetate content of less than 50 wt.%, in particular polyethylene, polypropylene and/or an ethylene-vinyl acetate copolymer having a vinyl acetate content 10 - 25 wt.%.

Thereby, preferably, the first thermoplastic polymer component comprises 35 - 85 wt.%, especially 40 - 75 wt.%, particularly 45 - 70 wt.% or 45 - 60 wt.%, of the at least one further thermoplastic polymer, especially a polyolefin and/or an ethylene-vinyl acetate copolymer having a vinyl acetate content of less than 50 wt.%.

Such combinations and proportions of thermoplastic polymers turned out to be especially beneficial.

According to a highly preferred embodiment, the functional layer, based on the total weight of the functional layer, comprises 40 - 60 wt.%, especially 45 - 55 wt.%, of the first thermoplastic polymer component and 40 - 60 wt.%, especially 45 - 55 wt.%, of the solid filler component.

The second thermoplastic polymer component of the barrier layer preferably is selected from the group consisting of ethylene - vinyl acetate copolymers (EVA), ethylene - acrylic ester copolymers, ethylene - α-olefin co-polymers, ethylene - propylene co-polymers, polypropylene (PP), polyethylene (PE), polyvinylchloride (PVC), polyethylene terephthalate (PET), polystyrene (PS), polyamides (PA), chlorosulfonated polyethylene (CSPE), ethylene propylene diene rubber (EPDM), polyisobutylene (PIB), and mixtures thereof.

Especially preferred, the second thermoplastic polymer component is a thermoplastic polyolefin, a flexible polyolefin (FPO) and/or an ethylene-vinyl acetate copolymer having a vinyl acetate content of less than 50 wt.%. In particular a polyethylene, polypropylene, and/or a copolymer of ethylene with another α-olefin; and/or an ethylene-vinyl acetate copolymer having a vinyl acetate content 10 - 25 wt.%

Especially, the second thermoplastic polymer component of the barrier layer is preferably miscible with the first thermoplastic polymer component of the functional layer. More preferably, the second thermoplastic polymer component is weldable with the first thermoplastic polymer component.

According to one embodiment, the first thermoplastic polymer component and the second thermoplastic polymer component comprise at least one common thermoplastic polymer.

A proportion of the second thermoplastic polymer component in the barrier layer in particular is from 60 - 100 wt.-%, especially 75 - 100 wt.%, based on the total weight of the barrier layer.

According to a preferred embodiment, the barrier layer comprises 1 - 50 wt.%, especially 5 - 30 wt.%, in particular 10 - 25 wt.%, of a further solid filler component, especially calcium carbonate particles.

The further solid filler component in particular is selected from mineral binder particles and/or inert particles, especially as described above.

The further solid filler component in particular is selected from calcium carbonate, sand, crystalline silicas, dolomite, clay, talc, mica, Wollastonite, barite, perlite, diatomaceous earth, pumice, and/or vermiculite.

A proportion of mineral binder, in particular hydraulic binder, especially cement, in the further solid filler component of the barrier layer, preferably is smaller than 40 wt.%, especially smaller than 25 wt.%, especially smaller than 10 wt.%, smaller than 5 wt.% or 0 wt.%.

There are no particular restrictions for the thickness of the functional layer. However, membranes with a functional layer thickness of above 50 mm hardly are practical in waterproofing applications and functional layers with a thickness of below 50 µm have been found to be difficult to produce with the desired mechanical properties. In particular, the functional layer has a thickness of at least 0.1 mm, preferably of 0.1 - 75.0 mm, more preferably 0.1 - 25.0 mm, most preferably 0.1 - 10.0 mm. The thickness of the functional layer can be measured according to EN 1849-2.

The thickness of the barrier layer is not subject to any particular restrictions. However, membranes with barrier layer thickness of above 15 mm and below 10 µm are usually not practical in waterproofing applications. The thickness of the barrier layer preferably is in the range of 0.1 - 10.0 mm, more preferably 0.1 - 7.5 mm, most preferably 0.1 - 5.0 mm.

Especially, a thickness of the functional layer is higher than the thickness of the barrier layer.

Highly preferred, the barrier layer has one or more, especially all, of the following properties:
- An impact resistance of 200 - 1500 mm measured according to EN 12691: 2005;
- A longitudinal and transversal tensile strength of at least 5 MPa at a temperature of 23°C measured according to DIN ISO 527-3;
- longitudinal and transversal elongation at break of at least 300% at a temperature of 23°C measured according to DIN ISO 527-3;
- water resistance at 0.6 bar for 24 hours measured according to EN 1928 B, and/or
- maximum tear strength of at least 100 N measured according to EN 12310-2.

The functional layer and/or the barrier layer can optionally comprise in addition one or more additive(s), such e.g. UV- and heat stabilizers, plasticizers, foaming agents, dyes, colorants, pigments, matting agents, antistatic agents, impact modifiers, flame retardants, and processing aids such as lubricants, slip agents, antiblock agents, and/or denest aids.

According to a highly preferred embodiment, the functional layer comprises:
- 40 - 60 wt.%, especially 45 - 55 wt.%, based on the total weight of the functional layer, of the first thermoplastic polymer component, whereby the first thermoplastic polymer component comprises:
   ∘ 20 - 55 wt.%, particularly 35 - 55 wt.%, of the ethylene-vinyl acetate copolymer having a vinyl acetate content of at least 50 wt.%, especially at least 60 wt.%, in particular at least 65 wt.%;
   ∘ 40 - 75 wt.%, particularly 45 - 70 wt.%, of the at least one further thermoplastic polymer, especially a polyolefin and/or an ethylene-vinyl acetate copolymer having a vinyl acetate content of less than 50 wt.%, in particular polyethylene, polypropylene and/or an ethylene-vinyl acetate copolymer having a vinyl acetate content 10 - 25 wt.%;
- 40 - 60 wt.%, especially 45 - 55 wt.%, based on the total weight of the functional layer, of the solid filler component, whereby
   ∘ the solid filler component, with respect to the total weight of the solid filler component, comprises at least 75 - 100 wt.%, especially 90 - 100 wt.%, of calcium carbonate particles;
   ∘ a proportion of mineral binder in the solid filler component, especially cement, is smaller than 25 wt.%, especially smaller than 10 wt.%, smaller than 5 wt.% or 0 wt.%;
and the barrier layer comprises:
- 50 - 99 wt.-%, especially 75 - 100 wt.%, based on the total weight of the barrier layer, of the second thermoplastic polymer component
   ∘ whereby the second thermoplastic polymer component of the barrier layer comprises a thermoplastic polyolefin, a flexible polyolefin (FPO) and/or an ethylene-vinyl acetate copolymer having a vinyl acetate content of less than 50 wt.%;
- 1 - 50 wt.%, especially 5 - 30 wt.%, in particular 10 - 25 wt.%, of a further solid filler component, especially calcium carbonate.

For example, the membrane consist of the functional layer and the barrier layer. However, in other embodiments, further layers may be present.

According to another preferred embodiment, the membrane comprises an additional functional layer. Thereby, preferably the additional functional layer is present on the barrier layer on a surface opposite the first functional layer, especially such that the barrier layer is sandwiched between the two functional layers.

In particular, the additional functional layer has a composition and/or structure as described above for the first functional layer. In a special embodiment, the two functional layers are identical in design. However, they might be different in design as well.

Optional features described above with respect to the first functional layer preferably are realized with the additional functional layer as well.

In waterproofing applications, one of the most important characteristics of a membrane is the strength of adhesion by which the membrane is bonded to the substrate, for example a concrete surface, to be sealed against water penetration. In case the strength of adhesion is too low, gaps are more easily formed between the membrane and the surface of the substrate, which may lead to loss of water tightness after infiltration.

Preferably, the membrane according to the invention has concrete adhesion strength of at least 5 N/50 mm, more preferably at least 10 N/50 mm, even more preferably of at least 15 N/50 mm, even more preferably of at least 20 N/50 mm, most preferably of at least 30 N/50 mm. In particular, the membrane has concrete adhesion strength of at least 40 N/50 mm, preferably of at least 45 N/50 mm, more preferably of at least 50 N/50 mm, even more preferably of at least 55 N/50 mm, most preferably of at least 60 N/50 mm.

Preferably, the membrane has a concrete adhesion strength in the range of 10 - 400 N/50 mm, more preferably of 15-350 N/50 mm, even more preferably of 20-300 N/50 mm, most preferably of 30-250 N/50 mm.

The term "concrete adhesion strength of a membrane" refers to the average peel resistance [N/mm] per unit width of the membrane upon peeling the membrane from a surface of a concrete specimen, which has been casted on the surface of the functional layer and hardened for a given time under standard atmosphere (air temperature 23°C, relative air humidity 50%).

Preferably, the given hardening time is 28 days, especially 7 days, in particular 1.5 days.

A further aspect of the present invention is directed to construction, in particular, an above-ground or underground construction comprising a membrane as described above. Especially the construction is a building roof, a building facade, a base slab, an inner and/or outer area of a tunnel, a canopy, a bridge, a garage, a swimming pool, a landfill, a water retention, a pond and/or a dike.

In particular, the membrane is arranged on a surface of the construction and/or embedded within the construction.

Especially, the construction comprises or consists of mortar, concrete, metal, steel, sheet steel and/or timber.

In another aspect of the present invention, a method for producing a membrane is provided. The method for producing a membrane is not particularly limited and any conventional technology used for producing composite membranes comprising polymer based sheets and films can be used.

The membrane can e.g. be produced by extruding, calendering, compressing and/or casting processes.

Preferably, the method for producing a membrane comprises extruding and/or calendering and/or co-extruding a homogenized melt comprising the components of the functional layer and a homogenized melt comprising the components of the barrier layer.

The homogenized melt comprising the components of the functional layer can be obtained by melt-homogenizing a composition comprising the solid filler component and the first thermoplastic polymer component in an extruder or kneader.

The homogeneous melt comprising the components of the barrier layer can be obtained by melt-homogenizing a composition comprising the second thermoplastic polymer component in an extruder or a kneader.

The method for producing a membrane can comprise producing the barrier layer and the functional layer in separate processes after which the layers are bonded to each other, e.g. by lamination.

Especially, the produced barrier and functional layers can subsequently be bonded to each other by any conventional lamination technique, preferably by welding under the influence of pressure, pressing with IR radiation, or by pressing between heated calender rolls.

The method for producing a membrane can also be a co-extrusion-calendering process, in which process homogenized melts of compositions comprising the components of the barrier layer and the functional layer, respectively, are simultaneously extruded as layers on top of each other followed by quenching the extruded double layer material web between calender cooling rolls.

The homogenized melts comprising the aforementioned components of the barrier layer and the functional layer can further comprise typical additives used in extrusion and calendering processes such as internal lubricants, slip agents, antiblock agents, denest aids, oxidative stabilizers, melt strength enhancers. The homogenized melts can also further comprise other additives such as plasticizers, dyes, colorants, pigments, matting agents, antistatic agents, impact modifiers, and/or flame retardants.

The method for producing a membrane can further comprise a post-treatment step such as brushing and/or sand blasting and/or plasma treatment, in particular air plasma treatment, to optimize the surface properties of the produced functional layer. The final product is preferably stored in the form of rolls.

Further details about methods for producing a membrane can be found in WO 2017/108843 A1 on page 29, line 29 - page 34, line 23, which is hereby incorporated by reference.

In another aspect of the present invention, a method for waterproofing and/or sealing a substrate against water penetration is provided. The substrate can be any structural or civil engineering structure, which is to be sealed against moisture and/or water, such as a hardened concrete structure or a subsurface structure. The surface of the substrate can be orientated horizontally or not.

According to a preferred embodiment, the method for waterproofing and/or sealing a substrate comprises the steps of:
- applying a membrane according to the present invention to a surface of a substrate such that a surface of the barrier layer opposite the functional layer is directed against the surface of the substrate;
- casting a workable mineral binder composition, especially a cementitious composition, on a surface of the functional layer opposite the barrier layer; and
- hardening the workable mineral binder composition.

A workable mineral binder composition is a mineral binder composition which was mixed with mixing water.

Thereby, preferably, the workable mineral binder composition is a workable concrete composition.

The mineral binder composition after hardening can be part of a structure, in particular, a construction as described above.

Another method for waterproofing and/or sealing a substrate against water penetration may comprise the steps of:
- applying a layer of adhesive on the surface of the substrate;
- covering the layer of the adhesive with a membrane of the present invention such that a surface of the functional layer opposite the barrier layer is brought in contact with the layer of adhesive, and
- hardening the layer of adhesive.

The adhesive can be a workable mineral binder composition, e.g. a fresh cementitious composition, or a synthetic resin based adhesive, such as epoxy based two-component adhesive or EVA-based adhesive, preferably a fresh cementitious composition, particularly a fresh concrete or shotcrete composition.

A still further aspect of the present invention is directed to the use of a membrane as described above for sealing and/or waterproofing a construction, especially a building roof, a building facade, a base slab, an inner and/or outer area of a tunnel, a canopy, a bridge, a swimming pool, a landfill, a water retention, a pond and/or a dike.

Further advantageous embodiments and combinations of features of the invention result from the following exemplary embodiments and the set of patent claims as a whole.

### Brief description of the drawings

The drawings used to illustrate the exemplary embodiments show:
- Fig. 1: a cross-section of a membrane having a barrier layer and a functional layer;
- Fig. 2: a cross-section of a membrane of the present invention having a barrier layer and two functional layers.

In general, identical parts are marked with the same reference symbols in the figures.

### Examples

### Materials

The materials shown in the following table 1 were used in the examples.

**Table 1. Materials used in the experiments**

| **Trade name** | **Composition** | **Provider** |
|---|---|---|
| Dowlex 2606 GC | Polyethylene polymer | Dow |
| Greenflex ML 50 | EVA* copolymer with 19 wt.-% VA^{#} | Eni |
| Levapren 700 | EVA* copolymer with 70 wt.-% VA^{#} | Lanxess |
| Lafarge Superblanc 52.5 N | Portland cement (CEM I, 52.5 N) | Lafarge |
| Queo O203 | Ethylene based octene-1 plastomer | Borealis |
| Omya EX-H1 | Calcium carbonate (surface treated with 0.7 wt.% stearic acid; d50 = 2.0 µm; 99.5% CaCO₃) | Omya |
| Omya BSH | Calcium carbonate (surface treated with 0.7 wt.% stearic acid; d50 = 2.4 µm; 98% CaCO) | Omya |
| Holcim Optimo 4 | CEM II/B-M (T-LL) 42,5 N SN EN 197-1 cement | LaFargeHo Icim |

| | | |
|---|---|---|
| *EVA = ethylene-vinyl acetate copolymer ^{#}VA = vinyl acetate | | |

### Preparation of membranes

The example membranes each comprising a barrier layer and a functional layer were produced with a laboratory scale extrusion-calendering apparatus comprising a flat die and set of water-cooled calender rolls. The layers were extruded with a twin-screw extruder (Berstorff GmbH).

For each example membrane, the functional layer was first produced with the extrusion-calendering apparatus after which the barrier layer was extruded and bonded on one surface of the functional layer using the same extrusion-calendering apparatus.

The extruder part of the apparatus was equipped with a flat die and the melted compositions of the functional layers were extruded without using a die lip. The polymer component of the functional layer was first melt-processed in the extruder at a temperature, which is approximately 30 °C above the melting temperature of the polymer component before the solid filler component was fed into the extruder through a side feeder. The produced functional layers had a thickness of approximately 1.50 mm while the thickness of the barrier layer was approximately 0.5 mm. A melted composition consisting of the constituents of the barrier layer was extruded with a flat die on the surface of each functional layer and the layers were pressed together and cooled between calender cooling rolls.

Specific compositions membranes produced are given in the results section in table 2.

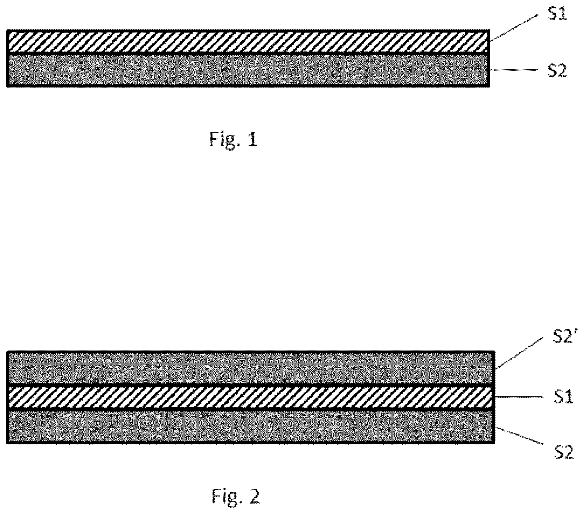

A schematic drawing of the membranes produced and comprising a functional layer S2 and a barrier layer S1 are shown in Fig. 1.

### Preparation of concrete test specimen

Three sample membranes with a dimension of 200 mm (length) x 50 mm (width) were cut from each of the example membranes EX1-EX9 produced as described above. The sample membranes were placed into formworks having a dimension of 200 mm (length) x 50 mm (width) x 30 mm (height) with the functional layer facing upwards and with the barrier layer against the bottom of the formwork.

One edge of each sample membrane on the side of the functional layer was covered with an adhesive tape having a length of 50 mm and width coinciding with the width of the membrane sample to prevent the adhesion to the hardened concrete. The adhesive tapes were used to provide easier installation of the test specimens to the peel resistance testing apparatus.

For the preparation of concrete specimens, a batch of fresh concrete formulation was prepared. The concrete compositions comprised cement of type CEM 142.5 N, sand 0-1 mm, sand 1-4 mm, gravel 4-8 mm, limestone filler and a plasticizer. The fresh concrete formulation was obtained by mixing the components with water in a tumbling mixer.

The formworks containing the sample membranes were subsequently filled with the fresh concrete formulation and vibrated for two minutes to release the entrapped air. After hardening for one day the test concrete specimens were stripped from the formworks and either directly used for measuring the peel resistances or stored under standard atmosphere (air temperature 23°C, relative air humidity 50%) before measuring the peel resistances.

### Measurement of peel resistances

The measurement of peel resistances of sample membranes from hardened concrete specimen was conducted in accordance with the procedure laid out in the standard DIN EN 1372:2015-06. A Zwick Roell AllroundLine Z010 material testing apparatus equipped with a Zwick Roell 90°-peeling device (type number 316237) was used for conducting the peel resistance measurements.

For the peel resistance measurements, a concrete specimen was clamped with the upper grip of the material testing apparatus for a length of 10 mm at the end of the concrete specimen comprising the taped section of the sample membrane. Following, the sample membrane was peeled off from the surface of the concrete specimen at a peeling angle of 90 ° and at a constant cross beam speed of 100 mm/min. During the measurements the distance of the rolls was approximately 570 mm. The peeling of the sample membrane was continued until a length of approximately 140 mm of the sample membrane was peeled off from the surface of the concrete specimen. The values for peel resistance were calculated as average peel force per width of the sample membrane [N/ 50 mm] during peeling over a length of approximately 70 mm thus excluding the first and last quarter of the total peeling length from the calculation.

The average peel resistance values for the example membranes presented in table 2 and 3 have been calculated as an average of measured values obtained with three sample membranes cut from the same example membrane.

### Results

The results of a first set of experiments with membranes A1 - A4 that are free of any cement is shown in table 2.

**Table 2. Compositions of the membranes [in weight parts] and measured peel resistances [N/50 mm].**

| | **A1** | **A2** | **A3** | **A4** |
|---|---|---|---|---|
| **Functional layer** | | | | |
| 1^{st} polymer component | | | | |
| - Levapren 700 | 50 | 35 | 35 | 35 |
| - Dowlex 2606 GC | 24 | 32 | 32 | 32 |
| - Greenflex ML 50 | 26 | 33 | 33 | 33 |
| Solid filler component | | | | |
| - Omyacarb EX-H1 | 102 | | 102 | 125 |
| - Omya BSH | | 102 | | |
| Additives | 1 | 1 | 1 | 1 |
| Subtotal | 203 | 203 | 203 | 226 |

| **Barrier layer** | | | | |
|---|---|---|---|---|
| 2^{nd} polymer component | | | | |
| - Dowlex 2606 GC | 48 | 48 | 48 | 48 |
| - Greenflex ML 50 | 10 | 10 | 10 | 10 |
| - Queo O203 | 42 | 42 | 42 | 42 |
| Solid filler component | | | | |
| - Omyacarb EX-H1 | 20 | 20 | 20 | 20 |
| Additives | 0.3 | 0.3 | 0.3 | 0.3 |
| Subtotal | 120.3 | 120.3 | 120.3 | 120.3 |

| **Peel resistance** | | | | |
|---|---|---|---|---|
| 1.5 days [N/50mm] | 29 | 20 | 19 | 34 |
| 7 days [N/50mm] | 107 | 44 | 66 | 85 |

As evident from table 2, the membranes according to the invention show rather high peel resistances. Specifically, membrane A1 with a proportion of EVA copolymers with 70 wt.-% vinyl acetate performs very well, both after 1.5 days as well as after 7 days. Likewise, membrane A4 with the highest proportion of calcium carbonate performs better than membranes A2 and A3 with otherwise comparable compositions. Thus, it can be concluded that both, EVA copolymers with 70 wt.-% vinyl acetate and calcium carbonate filler, are decisive for obtaining high peel strengths.

Furthermore, a comparison of examples A2 and A3 shows that the type of calcium carbonate used in the functional layer has an effect on the peel strength as well.

The results of a second set of experiments with membranes R1 and B1 - B4 comprising cement are shown in table 3. Experiment R1 is a reference experiment.

**Table 3. Compositions of the membranes [in weight parts] and measured peel resistances [N/50 mm].**

| | **R1** | **B1** | **B2** | **B3** | **B4** |
|---|---|---|---|---|---|
| **Functional layer** | | | | | |
| 1^{st} polymer component | | | | | |
| - Levapren 700 | 0 | 8.9 | 12.7 | 12.7 | 21.7 |
| - Dowlex 2606 GC | 24.3 | 22.1 | 21.2 | 21.2 | 21.2 |
| - Greenflex ML 50 | 26.2 | 23.9 | 22.9 | 22.9 | 22.9 |
| Solid filler component | | | | | |
| - Lafarge Superblanc 52.5 N | 9.7 | 8.9 | 5.5 | 12.7 | 17.0 |
| - Omyacarb EX-H1 | 38.9 | 35.4 | 33.9 | 29.7 | 25.4 |
| - Omya BSH | | | | | |
| Additives | 1 | 1 | 1 | 1 | 1 |
| Subtotal | 100 | 100 | 100 | 100 | 100 |

| **Barrier layer** | | | | | |
|---|---|---|---|---|---|
| 2^{nd} polymer component | | | | | |
| - Dowlex 2606 GC | 39.9 | 39.9 | 39.9 | 39.9 | 39.9 |
| - Greenflex ML 50 | 8.3 | 8.3 | 8.3 | 8.3 | 8.3 |
| - Queo O203 | 34.9 | 34.9 | 34.9 | 34.9 | 34.9 |
| Solid filler component | | | | | |
| - Omyacarb EX-H1 | 16.6 | 16.6 | 16.6 | 16.6 | 16.6 |
| Additives | 0.2 | 0.2 | 0.2 | 0.2 | 0.2 |
| Subtotal | 100 | 100 | 100 | 100 | 100 |

| **Peel resistance** | | | | | |
|---|---|---|---|---|---|
| 1.5 days [N/50mm] | 2.7 | 12.2 | 14.7 | 13.0 | 12.7 |

As evident from table 3, membrane R1 without any EVA copolymers with 70 wt.-% vinyl acetate has the lowest peel strength of all membranes shown in table 3.

Remarkably, membrane B2 with the lowest proportion of cement performs best. Thereby, a comparison of membranes B2, B3 and B4 shows that replacing the cement by calcium carbonate while keeping the other components constant surprisingly results in a better peel strength.

The embodiments described above are to be understood only as examples, which can be modified as desired within the scope of the invention. Fig. 2 shows, for example, a variant of the invention in which the membrane contains a barrier layer S1 between two functional layers S2, S2'.

In summary, highly beneficial membranes for waterproofing and sealing are provided. Thanks to the low amounts of cement or the omission of cement, the membranes are very sustainable and have a rather lower CO₂ footprint.

## Claims

1. A waterproofing membrane, especially for use in the construction industry, comprising:
a) a functional layer comprising:
- 10 - 90 wt.-%, especially, 30 - 70 wt.%, based on the total weight of the functional layer, of a first thermoplastic polymer component, whereby the first thermoplastic polymer component comprises an ethylene-vinyl acetate copolymer having a vinyl acetate content of at least 50 wt.%, especially at least 60 wt.%, in particular at least 65 wt.%;
- 10 - 90 wt.-%, especially, 30 - 70 wt.%, based on the total weight of the functional layer, of a solid filler component, whereby the solid filler component, with respect to the total weight of the solid filler component, comprises at least 50 wt.%, especially at least 75 wt.%, of calcium carbonate particles;
b) a barrier layer comprising:
- 50 - 100 wt.-%, based on the total weight of the barrier, of a second thermoplastic polymer component;
wherein a composition of the functional layer is different from a composition of the barrier layer.

2. The membrane according claim 1, whereby the solid filler component in addition to calcium carbonate comprises additional solid filler selected from mineral binder and/or inert fillers.

3. The membrane according to any of preceding claims, wherein a proportion of mineral binder in the solid filler component, especially cement, is smaller than 40 wt.%, especially smaller than 25 wt.%, especially smaller than 10 wt.% or 0 wt.%.

4. The membrane according to any of preceding claims, whereby the solid filler component, with respect to the total weight of the solid filler component, comprises 80 - 100 wt.%, especially 90 - 100 wt.%, in particular 95 - 100 wt.% or 97 - 100 wt.%, of calcium carbonate.

5. The membrane according to any of preceding claims, whereby, with respect to the total weight of the calcium carbonate and any magnesium carbonate and iron oxide present in the calcium carbonate particles, a proportion of magnesium carbonate is smaller than 1 wt.%, especially smaller than 0.75 wt.%, in particular ≤ 0.4 wt.%; and/or a proportion of iron oxide is smaller than 0.5 wt.%, especially smaller than 0.3 wt.%, in particular ≤ 0.1 wt.%.

6. The membrane according to any of preceding claims, whereby the first thermoplastic polymer component comprises 15 - 75 wt.%, especially 20 - 55 wt.%, particularly 35 - 55 wt.%, of the ethylene-vinyl acetate copolymer having a vinyl acetate content of at least 50 wt.%.

7. The membrane according to any of preceding claims, whereby the first thermoplastic polymer component of the functional layer additionally comprises at least one further thermoplastic polymer, especially a polyolefin and/or an ethylene-vinyl acetate copolymer having a vinyl acetate content of less than 50 wt.%, in particular polyethylene, polypropylene and/or an ethylene-vinyl acetate copolymer having a vinyl acetate content 10 - 25 wt.%.

8. The membrane according to any of preceding claims, whereby the first thermoplastic polymer component comprises 35 - 85 wt.%, especially 40 - 75 wt.%, particularly 45 - 70 wt.% or 45 - 60 wt.%, of the at least one further thermoplastic polymer, especially a polyolefin and/or an ethylene-vinyl acetate copolymer having a vinyl acetate content of less than 50 wt.%.

9. The membrane according to any of preceding claims, wherein the membrane, based on the total weight of the functional layer, comprises 40 - 60 wt.%, especially 45 - 55 wt.%, of the first thermoplastic polymer component and 40 - 60 wt.%, especially 45 - 55 wt.%, of the solid filler component.

10. The membrane according to any of preceding claims, whereby the second thermoplastic polymer component of the barrier layer comprises a thermoplastic polyolefin, a flexible polyolefin (FPO) and/or an ethylene-vinyl acetate copolymer having a vinyl acetate content of less than 50 wt.%, in particular polyethylene, polypropylene, and/or an ac copolymer of ethylene another α-olefin, and/or an ethylene-vinyl acetate copolymer having a vinyl acetate content 10 - 25 wt.%.

11. The membrane according to any of preceding claims, whereby the barrier layer comprises 1 - 50 wt.%, especially 5 - 30 wt.%, in particular 10 - 25 wt.%, of a further solid filler component, especially calcium carbonate particles.

12. The membrane according to any of preceding claims, whereby: the functional layer comprises:
- 40 - 60 wt.%, especially 45 - 55 wt.%, based on the total weight of the functional layer, of the first thermoplastic polymer component, whereby the first thermoplastic polymer component comprises:
∘ 20 - 55 wt.%, particularly 35 - 55 wt.%, of the ethylene-vinyl acetate copolymer having a vinyl acetate content of at least 50 wt.%, especially at least 60 wt.%, in particular at least 65 wt.%;
∘ 40 - 75 wt.%, particularly 45 - 70 wt.%, of the at least one further thermoplastic polymer, especially a polyolefin and/or an ethylene-vinyl acetate copolymer having a vinyl acetate content of less than 50 wt, in particular polyethylene, polypropylene and/or an ethylene-vinyl acetate copolymer having a vinyl acetate content 10 - 25 wt.%;
- 40 - 60 wt.%, especially 45 - 55 wt.%, based on the total weight of the functional layer, of the solid filler component, whereby
∘ the solid filler component, with respect to the total weight of the solid filler component, comprises at least 75 - 100 wt.%, especially 90 - 100 wt.%, of calcium carbonate;
∘ a proportion of mineral binder in the solid filler component, especially cement, is smaller than 25 wt.%, especially smaller than 10 wt.%, smaller than 5 wt.% or 0 wt.%;
and the barrier layer comprises:
- 50 - 99 wt.-%, especially 75 - 100 wt.%, based on the total weight of the barrier layer, of the second thermoplastic polymer component
o whereby the second thermoplastic polymer component of the barrier layer comprises a thermoplastic polyolefin, a flexible polyolefin (FPO) and/or an ethylene-vinyl acetate copolymer having a vinyl acetate content of less than 50 wt.%;
- 1 - 50 wt.%, especially 5 - 30 wt.%, in particular 10 - 25 wt.%, of a further solid filler component, especially calcium carbonate.

13. A construction, especially a building roof, a building facade, a base slab, an inner and/or outer area of a tunnel, a canopy, a bridge, a swimming pool, a landfill, a water retention, a pond and/or a dike comprising a membrane according to any of the preceding claims.

14. A method for producing a membrane according to any of claims 1-12 comprising extruding and/or calendering and/or co-extruding a homogenized melt comprising the components of the barrier layer, and a homogenized melt comprising the components of the functional layer.

15. Use of a membrane according to any of claims 1 - 12 for sealing and/or waterproofing a construction, especially a building roof, a building facade, a base slab, an inner and/or outer area of a tunnel, a canopy, a bridge, a swimming pool, a landfill, a water retention, a pond and/or a dike.
